# EUROPÄISCHE PATENTSCHRIFT

(11) **EP 4 154 785 B1**
(45) Veröffentlichungstag und Bekanntmachung des Hinweises auf die Patenterteilung: **31.01.2024**
(21) Anmeldenummer: 21199127.8
(22) Anmeldetag: 27.09.2021
(51) Int. Cl.: A47L 9/28

(54) **BODENBEARBEITUNGSGERÄT MIT EINER AUSTAUSCHBAREN WECHSELKOMPONENTE SOWIE SYSTEM AUS EINEM BODENBEARBEITUNGSGERÄT UND EINEM EXTERNEN ENDGERÄT**
SOIL WORKING IMPLEMENT WITH REPLACEABLE COMPONENT AND SYSTEM COMPRISING A SOIL WORKING IMPLEMENT AND AN EXTERNAL TERMINAL
APPAREIL DE TRAITEMENT DU SOL DOTÉ D'UN COMPOSANT DE RECHANGE REMPLAÇABLE, AINSI QUE SYSTÈME COMPOSÉ D'UN DISPOSITIF DE TRAITEMENT DU SOL ET D'UN TERMINAL EXTERNE

(43) Veröffentlichungstag der Anmeldung: 29.03.2023
(73) Patentinhaber: Vorwerk & Co. Interholding GmbH, 42275 Wuppertal (DE)
(72) Erfinder: Reske, Simone, 8820 Wädenswil (CH); Erkek, David, 5000 Aarau (CH)
(74) Vertreter: Müller, Enno

(56) Entgegenhaltungen:
- EP-A1- 3 418 842
- DE-A1-102016 109 015
- US-A1- 2021 038 041

## Beschreibung

### Gebiet der Technik

Die Erfindung betrifft ein Bodenbearbeitungsgerät mit einer austauschbaren Wechselkomponente, einer Detektionseinrichtung zur Detektion eines durch eine Abnutzung der Wechselkomponente beeinflussten Ist-Parameters, einer Auswerteeinrichtung zur Ermittlung eines Abnutzungsgrades der Wechselkomponente anhand des Ist-Parameters und einer Kommunikationseinrichtung zur Kommunikation einer, ein Austauscherfordernis der Wechselkomponente betreffenden Information an ein in Kommunikationsverbindung mit dem Bodenbearbeitungsgerät stehendes externes Endgerät. Ein Bodenbearbeitungsgerät gemäß dem Oberbegriff des Anspruchs 1 ist z.B. aus US-A-2021038041 bekannt.

Daneben betrifft die Erfindung ein System aus einem derartigen Bodenbearbeitungsgerät und einem mit der Kommunikationseinrichtung des Bodenbearbeitungsgerätes in Kommunikationsverbindung stehenden externen Endgerät.

### Stand der Technik

Bodenbearbeitungsgeräte sowie Systeme der vorgenannten Art sind im Stand der Technik bekannt. Das Bodenbearbeitungsgerät kann beispielsweise ein Bodenpflegegerät oder Reinigungsgerät sein, insbesondere ein Saugreinigungsgerät oder Wischreinigungsgerät, welches über eine austauschbare Wechselkomponente verfügt, die bei Benutzung des Bodenbearbeitungsgerätes einem Verbrauch oder Verschleiß unterliegt.

Die DE 10 2016 109 015 A1 offenbart beispielsweise ein Haushaltsgerät, nämlich einen haushaltsüblichen Staubsauger, welcher als austauschbare Wechselkomponente beispielsweise ein Filtermodul, wie einen Filterbeutel oder einen Motorschutzfilter, aufweist. Ein Sensormodul überwacht, ob ein aktueller Zustandsparameter des Filtermoduls einen definierten Grenzwert überschreitet und veranlasst einen Austausch des Filters beziehungsweise eine Information an den Nutzer. Der Zustandsparameter des Filtermoduls kann beispielsweise eine Filterleistung sein oder aber auch ganz einfach eine Betriebszeitdauer des Filtermoduls.

### Zusammenfassung der Erfindung

Ausgehend von dem vorgenannten Stand der Technik ist es Aufgabe der Erfindung, Bodenbearbeitungsgeräte der vorgenannten Art weiterzubilden, sodass der Nutzer des Bodenbearbeitungsgerätes jederzeit von einem optimalen Ergebnis einer Bodenbearbeitungstätigkeit des Bodenbearbeitungsgerätes profitiert.

Zur Lösung der vorgenannten Aufgabe wird vorgeschlagen, dass die Wechselkomponente ein Bodenbearbeitungselement zur mechanischen Einwirkung auf eine zu bearbeitende Bodenfläche aufweist, wobei die Auswerteeinrichtung eingerichtet ist, bezogen auf einen definierten, mindestens eine Stunde betragenden Zeitraum einen Mittelwert des von der Detektionseinrichtung detektierten Ist-Parameters zu berechnen, den Mittelwert mit einem definierten Referenzwert zu vergleichen und in Abhängigkeit von dem Vergleichsergebnis den Abnutzungsgrad der Wechselkomponente zu bestimmen.

Erfindungsgemäß wird somit nicht bloß ein Zustand einer austauschbaren Wechselkomponente ermittelt, welche nicht in mechanischer Interaktion mit der zu bearbeitenden Fläche steht, nämlich beispielsweise ein Filter im Inneren des Bodenbearbeitungsgerätes, sondern ein Abnutzungsgrad einer austauschbaren Wechselkomponente, welche eine mechanische Einwirkung auf die zu bearbeitende Bodenfläche zeigt und somit einem Verschleiß durch Materialabtrag unterliegt. Das Bodenbearbeitungselement des Bodenbearbeitungsgerätes wirkt unter Kontakt auf die zu bearbeitende Bodenfläche ein, sodass das Material der Wechselkomponente verschlissen wird bis schließlich deren Abnutzungsgrad soweit fortgeschritten ist, dass ein Austausch des Bodenbearbeitungselementes erforderlich oder zumindest im Sinne eines optimalen Bodenbearbeitungsergebnisses empfehlenswert ist. Da der mechanische Verschleiß der Wechselkomponente einen negativen Effekt auf den Bodenbearbeitungserfolg hat, wird der Verschleiß durch Detektion eines Ist-Parameters überwacht. Im Sinne der Erfindung wurde dabei auch erkannt, dass nicht nur der Verschleißzustand der Wechselkomponente die mechanische Einwirkung der Wechselkomponente auf die zu bearbeitende Bodenfläche beeinflusst, nämlich beispielsweise deren Eingriff miteinander, sondern vielmehr auch die Art der Bodenfläche, welche von dem Bodenbearbeitungselement bearbeitet wird, einen Einfluss hat. Falls es sich bei dem Bodenbearbeitungselement beispielsweise um eine Reinigungsbürste des Bodenbearbeitungsgerätes handelt, ist die mechanische Wechselwirkung des Bodenbearbeitungselementes mit einem Teppichboden wesentlich größer als dies beispielsweise bei einem Hartboden der Fall ist. Dadurch erhöht sich der Reibwiderstand des Bodenbearbeitungselementes auf der zu bearbeitenden Fläche und ein die rotierende Bürste antreibender Elektromotor verbraucht auf Teppichboden mehr elektrische Energie als dies auf einem Hartboden der Fall wäre. Wenn das Bodenbearbeitungsgerät demgegenüber einen Hartboden reinigt, verbraucht der Antriebsmotor entsprechend weniger elektrische Energie, was jedoch fälschlicherweise für eine Folge eines fortschreitenden Verschleißes der Wechselkomponente gehalten werden könnte. Um daher keine falsche Schlussfolgerung zu ziehen, sondern vielmehr den Abnutzungsgrad der Wechselkomponente unabhängig von der Bodenart korrekt bestimmen zu können, wurde im Sinne der Erfindung erkannt, dass es erforderlich ist, den Einfluss unterschiedlicher Bodenarten auszuschließen. Dies erfolgt erfindungsgemäß dadurch, dass die Auswerteeinrichtung des Bodenbearbeitungsgerätes den detektierten Ist-Parameter, welcher durch u.a. die Abnutzung der Wechselkomponente, jedoch auch durch die Art des Bodenbelages beeinflusst ist, über einen definierten Zeitraum ermittelt, welcher Zeitraum üblicherweise beinhaltet, dass das Bodenbearbeitungsgerät in dieser Zeit über unterschiedliche Bodenarten verfährt und somit unterschiedliche bodenartabhängige Ist-Parameter von der Detektionseinrichtung ermittelt werden. Insbesondere ist der Zeitraum so groß, dass ein kompletter Reinigungszyklus eines Haushalts durchlaufen werden kann und das Bodenbearbeitungsgerät somit über alle Arten von zu bearbeitenden Flächen verfahren ist, zum Beispiel Laminat, Fliesenboden, Teppichboden, Holzboden und gegebenenfalls andere. Der über diesen Zeitraum gebildete Mittelwert des gemessenen Ist-Parameters wird dann mit einem abgespeicherten Referenzwert verglichen. Sofern der Mittelwert dann den Referenzwert beispielsweise unterschreitet, ist dies ein Hinweis auf einen übermäßigen Abnutzungsgrad der Wechselkomponente, sodass der Nutzer in näherer Zukunft, in Kürze oder auch sofort einen Austausch der Wechselkomponente vornehmen sollte.

Wie erwähnt, ist das Bodenbearbeitungsgerät beispielsweise ein nutzergeführtes oder sich selbsttätig fortbewegendes Bodenpflegegerät oder ein Reinigungsgerät, zum Beispiel ein Staubsauger. Das Bodenbearbeitungsgerät kann ein Basisgerät mit verschiedenen an das Basisgerät anschließbaren Zubehörgeräten aufweisen. Bei den Zubehörgeräten kann es sich beispielsweise um Geräte handeln, die das Basisgerät gegenüber der zu reinigenden Fläche abstützen. Beispielsweise kann dies eine Bodendüse sein, die an das Basisgerät angeschlossen und über die zu reinigende Fläche geführt wird. Des Weiteren kann ein Zubehörgerät auch eine Wischplatte, Polierplatte oder ähnliches sein. Das Bodenbearbeitungsgerät verfügt über eine Steuerungselektronik, zu welcher auch die Auswerteeinrichtung gehört. Die Steuerungselektronik des Bodenbearbeitungsgerätes steuert sowohl die Parameter des Basisgerätes, als auch die Parameter des Zubehörgerätes, insbesondere die aktiven Bauelemente und Baugruppen des Basisgerätes und der angeschlossenen Zubehörgeräte. Für den Nutzer zweckdienliche und/ oder erforderliche Informationen können an dem Bodenbearbeitungsgerät unmittelbar in geeigneter Form angezeigt werden, beispielsweise über ein an dem Basisgerät angeordnetes Display. Darüber hinaus können derartige Informationen jedoch auch mittels der Kommunikationseinrichtung an ein externes Endgerät des Nutzers übermittelt werden, beispielsweise ein Smartphone oder ein Laptop. Informationen in diesem Sinne können Statusmitteilungen oder Betriebsdaten des Bodenbearbeitungsgerätes sein, beispielsweise Füllstände von Staubsammelbehältern, Einstellungen des Bodenbearbeitungsgerätes, Messwerte von Sensoren sowie auch entsprechende Daten eines mit dem Basisgerät verbundenen Zubehörgerätes. Die Detektionseinrichtung des Bodenbearbeitungsgerätes kann entweder in dem Basisgerät, in dem Zusatzgerät oder auch in einer von dem Bodenbearbeitungsgerät separat ausgebildeten Komponente verbaut sein. Die Messwerte der Detektionseinrichtung werden über eine Kommunikationsschnittstelle, beispielsweise die Kommunikationseinrichtung des Bodenbearbeitungsgerätes, an das externe Endgerät des Nutzers übertragen. Eine Auswertung der Messwerte kann entweder durch eine eigene Auswerteeinrichtung des Bodenbearbeitungsgerätes oder mittels einer externen Auswerteeinrichtung erfolgen. Insbesondere ist es auch möglich, dass eine Recheneinrichtung eines externen Servers oder eine Recheneinrichtung des externen Endgerätes die Auswertung der Messdaten übernimmt. Darüber hinaus kann das in Kommunikationsverbindung mit dem Bodenbearbeitungsgerät stehende externe Endgerät, welches die Information über das Austauscherfordernis der Wechselkomponente empfängt, ein Nutzerendgerät oder ein Endgerät, beispielsweise Server, eines Herstellers des Bodenbearbeitungsgerätes sein. Des Weiteren ist es möglich, dass das externe Endgerät ein Server eines Herstellers oder Verkäufers der Wechselkomponente ist, welcher durch die Information darüber in Kenntnis gesetzt wird, dass eine neue Wechselkomponente benötigt wird.

Des Weiteren wird vorgeschlagen, dass das Bodenbearbeitungselement ein Reinigungselement, insbesondere ein Reinigungstuch oder eine Reinigungsbürste, ein Bodenpflegeelement, insbesondere eine Polierscheibe oder eine Bohnerscheibe, oder ein Einarbeitungswerkzeug zum Einarbeiten eines Reinigungsmittels oder eines Pflegemittels in die zu bearbeitende Bodenfläche ist. Darüber hinaus können auch andere Arten von Bodenbearbeitungselementen vorgesehen sein. Wesentlich ist, dass diese Bodenbearbeitungselemente bei der Ausführung der Bodenbearbeitungstätigkeit tatsächlich eine mechanische Einwirkung auf die zu bearbeitende Bodenfläche zeigen, nämlich in Kontakt oder in Eingriff mit dieser stehen. Der Eingriff beziehungsweise Kontakt ist vorzugsweise derart, dass es bei dem Eingriff beziehungsweise Kontakt zu einer Abnutzung des Materials des Bodenbearbeitungselementes kommt, sodass sich die Abmaße des Bodenbearbeitungselementes im Laufe der Zeit verringern und somit die Reibkraft des Bodenbearbeitungselementes auf der bearbeiteten Bodenfläche sinkt. Neben dem eigentlichen Bodenbearbeitungselement kann die Wechselkomponente noch andere Elemente oder Bereiche aufweisen, beispielsweise Gehäuseteilbereiche, Halterungen für das Bodenbearbeitungselement und andere.

Das Bodenbearbeitungselement kann des Weiteren mittels eines Elektromotors oder eines Aktors angetrieben sein. Derartige, relativ zu einem Gehäuse des Bodenbearbeitungsgerätes angetriebene Bodenbearbeitungselemente weisen üblicherweise einen noch höheren Verschleiß auf als feststehende Bodenbearbeitungselemente. Ein bewegliches Bodenbearbeitungselement kann in diesem Sinne beispielsweise eine rotierende Reinigungswalze, eine schwingende Wischplatte oder ähnliches sein. Der Antrieb solcher Bodenbearbeitungselemente erfolgt üblicherweise mit Hilfe von Elektromotoren. Darüber hinaus kann der Antrieb auch einen Aktor aufweisen, beispielsweise einen Bimetall-Aktor, Piezoaktor, Formgedächtnis-Aktor oder andere.

Die Detektionseinrichtung kann eingerichtet sein, einen Stromverbrauch oder ein Drehmoment eines das Bodenbearbeitungselement antreibenden Elektromotors oder Aktors zu detektieren. Darüber hinaus kann die Detektionseinrichtung beispielsweise auch eine induzierte Spannung, einen Temperaturanstieg, eine Schallemission, ein Magnetfeld oder ein andere Parameter messen, je nach der Art des Bodenbearbeitungselementes beziehungsweise der Art einer das Bodenbearbeitungselement antreibenden Antriebseinrichtung.

Insbesondere kann vorgesehen sein, dass der von der Detektionseinrichtung detektierte Ist-Parameter ein Geräteparameter des Bodenbearbeitungsgerätes oder ein Bodenflächenparameter der von dem Bodenbearbeitungselement bearbeiteten Bodenfläche ist. Der Ist-Parameter, welcher ein Maß für den Abnutzungsgrad der Wechselkomponente angibt, kann somit eine eigene Messgröße des Bodenbearbeitungsgerätes sein, wie beispielsweise ein Stromverbrauch, Drehmoment oder ähnliches, alternativ jedoch auch eine Messgröße der bearbeiteten Bodenfläche, welche durch den Abnutzungsgrad der Wechselkomponente beeinflusst ist. Sofern die Wechselkomponente nicht mehr in optimalem Kontakt beziehungsweise Eingriff mit der Bodenfläche steht, zeigt sich dies an der Bearbeitungsqualität der Bodenfläche, sodass auch die Bodenfläche selbst entsprechend einen Hinweis auf den Zustand der Wechselkomponente gibt.

Insbesondere kann vorgesehen sein, dass die Detektionseinrichtung eine optische Messeinrichtung ist, welche eingerichtet ist, ein Bild der von dem Bodenbearbeitungselement bearbeiteten Bodenfläche aufzunehmen oder ein Reflexionssignal der bearbeiteten Bodenfläche zu detektieren. Das Bild der Bodenfläche ist dabei bevorzugt ein Bild einer vollständig bearbeiteten Bodenfläche. Dieses Bild wird mit einem Referenzbild verglichen, beispielsweise einer oder mehreren älteren Aufnahmen desselben Teilbereiches der Bodenfläche. Mithilfe eines Auswertealgorithmus können Veränderungen des Bodenbearbeitungszustands, beispielsweise Reinigungszustands, der Bodenfläche beziehungsweise zumindest eines definierten Flächenteilbereiches bestimmt werden. Insbesondere ist ein Referenzbild bevorzugt eine Aufnahme eines Flächenteilbereiches, welcher mit einer neuen, d.h. noch nicht abgenutzten, Wechselkomponente bearbeitet wurden. Dies definiert dann den optimalen Zustand der bearbeiteten Bodenfläche beziehungsweise des Flächenteilbereiches.

Es kann vorgesehen sein, dass der Zeitraum, über welchen der Mittelwert des Ist-Parameters gebildet wird, einen Tag oder mehrere Tage, eine Woche oder mehrere Wochen, oder einen Monat oder mehrere Monate umfasst. Wesentlich ist, dass der Zeitraum so groß ist, dass das Bodenbearbeitungsgerät in dieser Zeit auch die Möglichkeit hat, unterschiedliche Arten von Bodenflächen zu befahren. Besonders bevorzugt entspricht der Zeitraum einem vollständigen Bodenbearbeitungszyklus des Bodenbearbeitungsgerätes innerhalb einer Wohnung, eines Hauses, eines Büros oder ähnlichem. Wesentlich ist hier auch, die Zeiträume gemäß der Erfindung von Zeiträumen abzugrenzen, die eine äußerst kurzzeitige Mittelwertbildung alleine zum Zweck einer Signalglättung beziehungsweise des Ausschlusses von rechnerischen Artefakten beinhalten.

Es kann des Weiteren vorgesehen sein, dass die Detektionseinrichtung eingerichtet ist, den Ist-Parameter während des Zeitraums, über welchen der Mittelwert des Ist-Parameters gebildet wird, kontinuierlich oder in definierten Zeitabständen zu detektieren. Die Zeitabstände können regelmäßig oder unregelmäßig definiert sein. Je nach der Größe des Zeitraums empfiehlt es sich, entweder eine kontinuierliche Datenaufnahme beziehungsweise Analyse oder eine nur diskrete Datenaufnahme oder Datenanalyse vorzunehmen.

Neben dem beschriebenen Bodenbearbeitungsgerät wird mit der Erfindung des Weiteren auch ein System aus einem Bodenbearbeitungsgerät und einem mit der Kommunikationseinrichtung des Bodenbearbeitungsgerätes in Kommunikationsverbindung stehenden externen Endgerät vorgeschlagen, wobei das externe Endgerät eine Applikation aufweist, die eingerichtet ist, einen Nutzer des Bodenbearbeitungsgerätes über den ermittelten Abnutzungsgrad der Wechselkomponente zu informieren und von dem Nutzer eine Vorgabe hinsichtlich einer Art einer automatischen Reaktion der Auswerteeinrichtung des Bodenbearbeitungsgerätes auf den ermittelten Abnutzungsgrad und/oder eine Vorgabe hinsichtlich eines Abnutzungsgrades, bei dessen Erreichen die automatische Reaktion erfolgen soll, zu empfangen. Gemäß dieser Ausgestaltung kann der Nutzer selbst entscheiden und dem System vorgeben, ob eine beziehungsweise welche automatische Reaktion auf einen ermittelten Abnutzungsgrad erfolgen soll. Dadurch wird die Anwendung des Bodenbearbeitungsgerätes beziehungsweise dessen Reaktion flexibel angepasst. Der Nutzer wird nicht über ein gewünschtes Maß hinaus durch automatische Handlungen des Bodenbearbeitungsgerätes entmündigt. Vielmehr kann der Nutzer den Grad einer Reaktion beziehungsweise nachfolgenden Handlung des Bodenbearbeitungsgerätes selbst via der auf dem externen Endgerät installierten Applikation einstellen. Dies betrifft insbesondere die Voraussetzungen für Benachrichtigungen des Bodenbearbeitungsgerätes an den Nutzer beziehungsweise Grenzwerte des Abnutzungsgrades, welche überhaupt zu bestimmten Reaktionen des Bodenbearbeitungsgerätes beziehungsweise dessen Auswerteeinrichtung führen sollen. Die Applikation sieht insbesondere einen Konfigurationsbereich vor, in dem der Nutzer nach seinen persönlichen Präferenzen Grundeinstellungen vornehmen und vorgegebene Werte anpassen kann, sodass das Verhalten des Bodenbearbeitungsgerätes beziehungsweise der Applikation dem Wunsch des Nutzers beispielsweise hinsichtlich eingestellter Grenzwerte zur Auslösung von Benachrichtigungen oder hinsichtlich eines automatischen Nachbestellen von verschlissenen Wechselkomponenten entspricht.

Schließlich kann vorgesehen sein, dass die Art der automatischen Reaktion der Auswerteeinrichtung auf den ermittelten Abnutzungsgrad zumindest beinhaltet: Eine automatische Bestellung einer neuen Wechselkomponente bei einem Warenwirtschaftssystem und/oder eine Information über den Abnutzungsgrad an den Nutzer. In diesem Sinne kann der Grad einer Reaktion beziehungsweise nachfolgenden Aktion durch den Nutzer voreingestellt werden, sodass beispielsweise von einer automatischen Bestellauslösung einer Wechselkomponente bis zu einer bloßen Information des Nutzers ohne weitere Handlungsautomatismen eine individuelle Bandbreite vorwählbarer Aktionen gegeben ist.

Neben den vorbeschriebenen Eigenschaften des Systems kann des Weiteren auch eine Erfassung von Vorratsbeständen von Wechselkomponenten vorgesehen sein. Im Rahmen einer automatischen Bestellauslösung als Reaktion des Bodenbearbeitungsgerätes auf einen kritischen Abnutzungsgrad der Wechselkomponente kann bei Auslieferung beziehungsweise Erhalt der neuen Wechselkomponente eine definierte Anzahl von gelieferten Wechselkomponenten in der Applikation vermerkt werden. Die Applikation erkennt beispielsweise nicht nur, wann ein Austausch der Wechselkomponente erforderlich ist, sondern auch, ob dieser durchgeführt wurde. Diese Kenntnis kann dann genutzt werden, um nach dem detektierten Einsetzen der neuen Wechselkomponente in das Bodenbearbeitungsgerät den vermerkten Vorratsbestand in der Applikation um die dem Lager entnommene Wechselkomponente zu vermindern. Wenn dann z.B. in dem Bestand die vorletzte Wechselkomponente entnommen wurde und sich nur noch eine einzige Wechselkomponente in dem Bestand befindet, kann der Nutzer auf eine erforderliche Nachbestellung aufmerksam gemacht werden beziehungsweise eine automatische Bestellung ausgelöst werden. Des Weiteren kann dem Nutzer auch eine Telefonnummer, Geschäftsadresse oder ähnliches mitgeteilt werden, über die eine Nachbestellung ausgeführt werden kann. Die Applikation kann des Weiteren gegebenenfalls auch alle in einem Haushalt befindlichen Bodenbearbeitungsgeräte erfassen und deren Typenbezeichnungen speichern. Über die Typenbezeichnung und eine entsprechende Datenbank können die für den jeweiligen Typen passenden Wechselkomponenten ermittelt werden. Dies ist ganz besonders interessant, wenn in einem Haushalt unterschiedliche Bodenbearbeitungsgeräte im Einsatz sind, die entsprechend auch unterschiedliche Wechselkomponenten beinhalten.

### Kurze Beschreibung der Zeichnungen

Im Folgenden wird die Erfindung anhand von Ausführungsbeispielen näher erläutert. Es zeigen:
- Fig. 1: ein erfindungsgemäßes System aus einem Bodenbearbeitungsgerät und einem externen Endgerät,
- Fig. 2: das externe Endgerät bei Anzeige eines Abnutzungsgrades einer Wechselkomponente,
- Fig. 3: das externe Endgerät bei Darstellung nutzerwählbarer Einstellungen.

### Beschreibung der Ausführungsformen

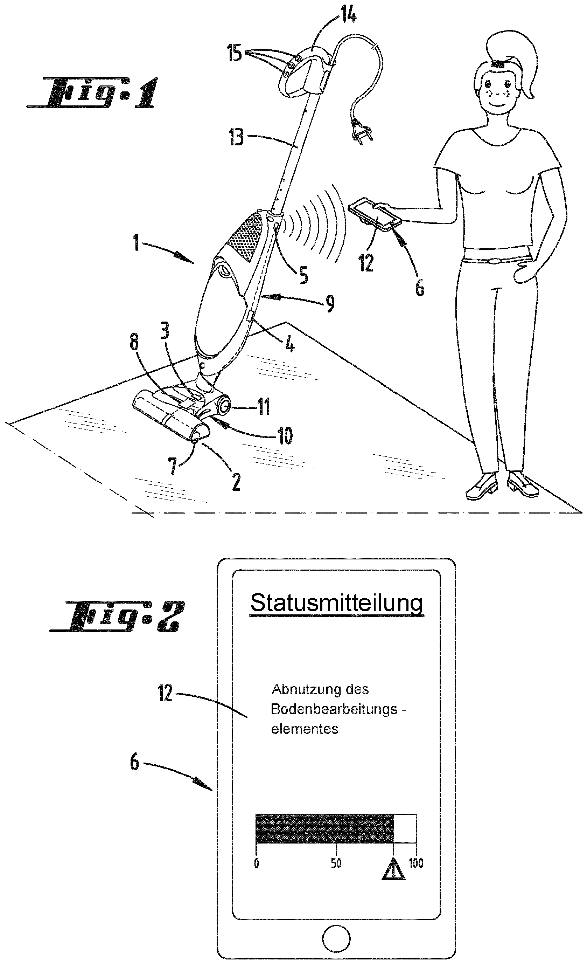

Figur 1 zeigt beispielhaft eine Ausführungsform eines erfindungsgemäßen Bodenbearbeitungsgerätes 1. Das Bodenbearbeitungsgerät 1 ist hier als von einem Nutzer manuell geführtes Bodenbearbeitungsgerät 1 ausgebildet. Im Sinne der Erfindung kann ein Bodenbearbeitungsgerät 1 alternativ jedoch auch ein sich selbsttätig fortbewegendes Bodenbearbeitungsgerät 1 sein, insbesondere ein autonom verfahrbarer Roboter. Das Bodenbearbeitungsgerät 1 ist hier ein haushaltsüblicher Staubsauger, welcher ein Basisgerät 9 und ein lösbar mit diesem verbundenes Zubehörgerät 10 aufweist. Das Basisgerät 9 kann - alternativ zu der dargstellten Saugdüse - des Weiteren auch mit anderen Arten von Zubehörgeräten 10 verbunden werden, je nach dem gewünschten Einsatzzweck des Bodenbearbeitungsgerätes 1. Beispielsweise kann das Bodenbearbeitungsgerät 1 durch die Wahl des Zubehörgerätes 10 von einem reinen Saugreinigungsgerät in beispielsweise ein Saug-Wisch-Reinigungsgerät geändert werden. Dazu wird als Zubehörgerät 10 beispielsweise eine Wischplatte mit dem Basisgerät 9 verbunden. Die Saugfunktion des Bodenbearbeitungsgerätes 1 kann in diesem Fall erhalten bleiben. An der dem Zubehörgerät 10 abgewandten Seite verfügt das Basisgerät 9 über einen Stiel 13, welcher bevorzugt teleskopierbar ausgebildet ist, sodass der Nutzer die Länge des Stiels 13 an seine Körpergröße anpassen kann. Der Stiel 13 verfügt endseitig über einen Handgriff 14 mit Bedienelementen 15. Über den Handgriff 14 kann der Nutzer das Bodenbearbeitungsgerät 1 während einer Bodenbearbeitung besonders vorteilhaft über die zu bearbeitende Bodenfläche führen, insbesondere in einer üblichen Hin- und Herbewegung.

Das Basisgerät 9 des Bodenbearbeitungsgerätes 1 weist des Weiteren eine Kommunikationseinrichtung 5 auf, beispielsweise eine WLAN- oder Bluetooth-Schnittstelle, welche geeignet ist, mit einem externen Endgerät 6 eines Nutzers zu kommunizieren. Das externe Endgerät 6 kann beispielsweise ein mobiles Endgerät, wie beispielsweise ein Mobiltelefon, Laptop, Tablet-Computer oder ähnliches sein, alternativ jedoch auch ein lokaler Standrechner. Das Basisgerät 9 verfügt des Weiteren über eine Auswerteeinrichtung 4, welche insbesondere Teil einer Geräteelektronik des Bodenbearbeitungsgerätes 1 ist. Die Auswerteeinrichtung 4 ist eingerichtet, eine oder mehrere Detektionseinrichtungen 3 des Basisgerätes 9 und des Zubehörgerätes 10 auszulesen und von diesen aufgenommene Messdaten zu analysieren. Des Weiteren kann die Auswerteeinrichtung 4 auch als Steuereinrichtung arbeiten und Steuerbefehle an eine oder mehrere steuerbare Komponenten des Basisgerätes 9 und des Zubehörgerätes 10 übermitteln. In diesem Sinne steuert die Auswerteeinrichtung 4 zentral alle Komponenten, insbesondere elektrischen Verbraucher, des Bodenbearbeitungsgerätes 1.

Das hier beispielhaft dargestellte Zubehörgerät 10 verfügt über ein Bodenbearbeitungselement 7, welches hier beispielhaft als mittels eines Elektromotors 8 angetriebene, rotierbare Reinigungsbürste ausgebildet ist. Das Bodenbearbeitungselement 7 stellt eine Wechselkomponente 2 im Sinne der Erfindung dar, welche einem Verschleiß unterliegt und daher beizeiten ausgetauscht werden muss, um den Bearbeitungserfolg des Bodenbearbeitungsgerätes 1 aufrechtzuerhalten. Bodenbearbeitungselemente 7 im Sinne der Erfindung stehen mit der zu bearbeitenden Bodenfläche im Eingriff, d.h. weisen mechanischen Kontakt zu dieser auf, und zeigen abhängig von einer abrasiven Wirkung der Bodenfläche eine Abnutzung ihres Materials, die über die Zeit betrachtet fortschreitet. Die abrasive Wirkung kann beispielsweise eine Abnutzung von Borstenfilamenten einer Reinigungsbürste betreffen, sodass sich im Laufe der Einsatzzeit des Bodenbearbeitungselementes 7 eine freie Länge der Borstenfilamente vermindert. Sobald die Borstenfilamente über eine bestimmte Länge hinaus verkürzt sind, können diese auf der zu bearbeitenden Bodenfläche in immer geringerem Maße eine Reinigungswirkung erzielen, sodass es zur Wiederherstellung der optimalen Reinigungsleistung des Bodenbearbeitungsgerätes 1 erforderlich ist, die abgenutzte Reinigungsbürste, d.h. Wechselkomponente 2, gegen eine ungebrauchte Reinigungsbürste zu tauschen.

Um einen Zeitpunkt zu ermitteln, an welchem die Wechselkomponente 2 optimalerweise ausgetauscht wird, ist die Auswerteeinrichtung 4 eingerichtet, einen Abnutzungsgrad der Wechselkomponente 2 zu bestimmen. Zu diesem Zweck wertet die Auswerteeinrichtung 4 zunächst die Messdaten einer oder mehrerer Detektionseinrichtungen 3 aus, wobei die Messdaten hier beispielsweise eine Energieaufnahme des das Bodenbearbeitungselement 7 antreibenden Elektromotors 8 betreffen. Die aktuelle Energieaufnahme des Elektromotors 8 beschreibt einen Ist-Parameter des Bodenbearbeitungsgerätes 1, welcher zur Ermittlung des Abnutzungsgrades der Wechselkomponente 2 dient. Alternativ können auch andere Ist-Parameter des Bodenbearbeitungsgerätes 1 detektiert werden. Es können jedoch auch Ist-Parameter der Bodenfläche selbst gemessen werden, welche einen Hinweis auf die aktuelle Bearbeitungsqualität des Bodenbearbeitungsgerätes 1 geben. In dem Fall kann das Bodenbearbeitungsgerät 1 als Detektionseinrichtung 3, beispielsweise eine Kamera, aufweisen, die ein Bild der aktuell fertig bearbeiteten Bodenfläche aufnimmt. Auch kann die Detektionseinrichtung 3 beispielsweise eine zu dem Bodenbearbeitungsgerät 1 separat ausgebildete Komponente sein.

Hier liest die Auswerteeinrichtung 4 einen physikalischen Parameter aus der Detektionseinrichtung 3 aus, welcher ein Maß für den Energieverbrauch beziehungsweise Stromverbrauch des Elektromotors 8 angibt. Die Auswerteeinrichtung 4 sammelt die Messdaten über einen zuvor definierten Zeitraum, welcher mindestens eine Stunde beträgt, und errechnet daraus einen Mittelwert für den von dem Elektromotor 8 während des Zeitraums verbrauchten Strom. Besonders bevorzugt wird das Bodenbearbeitungsgerät 1 während dieses Zeitraums über unterschiedliche Arten von Bodenflächen innerhalb eines Haushalts geführt, beispielsweise über sowohl Hartboden, als auch über Teppichboden. Unterschiedliche Arten von Bodenflächen bewirken unterschiedliche Einwirkungsgrade auf das Bodenbearbeitungselement 7 und damit auch auf das Bodenbearbeitungselement 7 antreibenden Elektromotor 8. Dadurch variiert wiederum der Stromverbrauch. Um nun Einflüsse der Bodenart auf den ermittelten Ist-Parameter - und damit den daraus errechneten Abnutzungsgrad der Wechselkomponente 2 - auszuschließen, erfolgt die Mittelwert-Berechnung über einen möglichst großen Zeitraum. Dieser kann beispielsweise eine oder mehrere Stunden, Tage, Wochen oder Monate betreffen.

Der so gebildete Mittelwert des gemessenen Ist-Parameters wird mit einem definierten Referenzwert verglichen, welchen der Nutzer insbesondere selbst festlegen kann. In Abhängigkeit von dem Vergleichsergebnis zwischen dem Mittelwert und dem Referenzwert wird der Abnutzungsgrad der Wechselkomponente 2 beziffert.

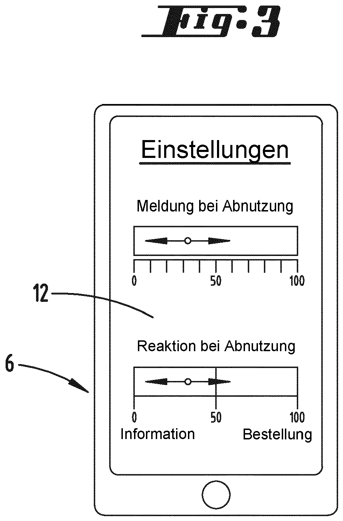

Auf dem in den Figuren 2 und 3 näher dargestellten externen Endgerät 6 des Nutzers ist eine Applikation installiert, mittels welcher das externe Endgerät 6 Daten mit der Auswerteeinrichtung 4 austauschen kann. Zur Datenkommunikation verfügt auch das externe Endgerät 6 in üblicher Art und Weise - wie das Bodenbearbeitungsgerät 1 - über eine drahtlose Kommunikationseinrichtung. Über ein Display 12 des externen Endgerätes 6 kann der Nutzer Eingaben vornehmen, insbesondere auch Einstellungen an dem Bodenbearbeitungsgerät 1 vornehmen. Die Einstellungen können, wie in Figur 3 dargestellt, beispielsweise Vorgaben sein, mit welchen beispielsweise ein bestimmter Abnutzungsgrad der Wechselkomponente 2 als ein "kritischer" Abnutzungsgrad definiert wird, bei dessen Erreichen die Wechselkomponente 2 getauscht werden sollte, um ein optimales Bodenbearbeitungsergebnis mittels des Bodenbearbeitungsgerätes 1 sicherstellen zu können. Darüber hinaus kann der Nutzer eine Reaktion definieren, welche das Bodenbearbeitungsgerät 1, beziehungsweise dessen Auswerteeinrichtung 4, bei Erreichen des "kritischen" Abnutzungsgrades zeigen soll. Für die Reaktion existieren in dem vorliegenden Beispiel zwei Alternativen, nämlich einerseits eine bloße Information über ein Wechselerfordernis der Wechselkomponente 2, und andererseits ein Einleiten eines automatischen Bestellvorgangs bei einem Warenwirtschaftssystem, mit welchem die Auswerteeinrichtung 4 des Bodenbearbeitungsgerätes 1 in Kommunikationsverbindung steht.

Die derart getätigten Voreinstellungen bestimmen die in Figur 2 dargestellte Anzeige des Abnutzungsgrads des Bodenbearbeitungselementes 7 auf dem Display 12 des externen Endgerätes 6. Hier hat der Nutzer beispielsweise die Voreinstellung getroffen, dass die Auswerteeinrichtung 4 bei Ermitteln eines Abnutzungsgrades von 80 Prozent eines maximal tolerierbaren Abnutzungsgrades der Wechselkomponente 2 eine Meldung an den Nutzer des Bodenbearbeitungsgerätes 1 ausgeben soll. Dem entsprechend wird der Nutzer über das in Figur 2 dargestellte Display 12 des externen Endgerätes 6 mit einem besonderen Hinweis darüber informiert, dass der kritische Abnutzungsgrad des Bodenbearbeitungselementes 7 nun erreicht ist. Es versteht sich von selbst, dass die Statusmitteilungen über den Abnutzungsgrad auch auf andere Art und Weise erfolgen können, beispielsweise durch andere graphische Darstellung, Text, Sprache oder Klang.

### Liste der Bezugszeichen

- 1: Bodenbearbeitungsgerät
- 2: Wechselkomponente
- 3: Detektionseinrichtung
- 4: Auswerteeinrichtung
- 5: Kommunikationseinrichtung
- 6: Externes Endgerät
- 7: Bodenbearbeitungselement
- 8: Elektromotor
- 9: Basisgerät
- 10: Zubehörgerät
- 11: Rad
- 12: Display
- 13: Stiel
- 14: Handgriff
- 15: Bedienelement

## Patentansprüche

1. Bodenbearbeitungsgerät (1) mit einer austauschbaren Wechselkomponente (2), einer Detektionseinrichtung (3) zur Detektion eines durch eine Abnutzung der Wechselkomponente (2) beeinflussten Ist-Parameters, einer Auswerteeinrichtung (4) zur Ermittlung eines Abnutzungsgrades der Wechselkomponente (2) anhand des Ist-Parameters und einer Kommunikationseinrichtung (5) zur Kommunikation einer, ein Austauscherfordernis der Wechselkomponente (2) betreffenden Information an ein in Kommunikationsverbindung mit dem Bodenbearbeitungsgerät (1) stehendes externes Endgerät (6), wobei die Wechselkomponente (2) ein Bodenbearbeitungselement (7) zur mechanischen Einwirkung auf eine zu bearbeitende Bodenfläche aufweist, **dadurch gekennzeichnet, dass** die Auswerteeinrichtung (4) eingerichtet ist, bezogen auf einen definierten, mindestens eine Stunde betragenden Zeitraum einen Mittelwert des von der Detektionseinrichtung (3) detektierten Ist-Parameters zu berechnen, den Mittelwert mit einem definierten Referenzwert zu vergleichen und in Abhängigkeit von dem Vergleichsergebnis den Abnutzungsgrad der Wechselkomponente (2) zu bestimmen.

2. Bodenbearbeitungsgerät (1) nach Anspruch 1, **dadurch gekennzeichnet, dass** das Bodenbearbeitungselement (7) ein Reinigungselement, insbesondere ein Reinigungstuch oder eine Reinigungsbürste, ein Bodenpflegeelement, insbesondere eine Polierscheibe oder eine Bohnerscheibe, oder ein Einarbeitungswerkzeug zum Einarbeiten eines Reinigungsmittels oder eines Pflegemittels in die zu bearbeitende Bodenfläche ist.

3. Bodenbearbeitungsgerät (1) nach Anspruch 1 oder 2, **dadurch gekennzeichnet, dass** das Bodenbearbeitungselement (7) mittels eines Elektromotors (8) oder Aktors angetrieben ist.

4. Bodenbearbeitungsgerät (1) nach einem der vorhergehenden Ansprüche, **dadurch gekennzeichnet, dass** die Detektionseinrichtung (3) eingerichtet ist, einen Stromverbrauch oder ein Drehmoment eines das Bodenbearbeitungselement (7) antreibenden Elektromotors (8) oder Aktors zu detektieren.

5. Bodenbearbeitungsgerät (1) nach einem der vorhergehenden Ansprüche, **dadurch gekennzeichnet, dass** der von der Detektionseinrichtung (3) detektierte Ist-Parameter ein Geräteparameter des Bodenbearbeitungsgerätes (1) oder ein Bodenflächenparameter der von dem Bodenbearbeitungselement (7) bearbeiteten Bodenfläche ist.

6. Bodenbearbeitungsgerät (1) nach einem der vorhergehenden Ansprüche, **dadurch gekennzeichnet, dass** die Detektionseinrichtung (3) eine optische Messeinrichtung ist, welche eingerichtet ist, ein Bild der von dem Bodenbearbeitungselement (7) bearbeiteten Bodenfläche aufzunehmen oder ein Reflexionssignal der bearbeiteten Bodenfläche zu detektieren.

7. Bodenbearbeitungsgerät (1) nach einem der vorhergehenden Ansprüche, **dadurch gekennzeichnet, dass** der Zeitraum, über welchen der Mittelwert des Ist-Parameters gebildet wird, einen Tag oder mehrere Tage, eine Woche oder mehrere Wochen, oder einen Monat oder mehrere Monate umfasst.

8. Bodenbearbeitungsgerät (1) nach einem der vorhergehenden Ansprüche, **dadurch gekennzeichnet, dass** die Detektionseinrichtung eingerichtet ist, den Ist-Parameter während des Zeitraums, über welchen der Mittelwert des Ist-Parameters gebildet wird, kontinuierlich oder in definierten Zeitabständen zu detektieren.

9. System aus einem Bodenbearbeitungsgerät (1) nach einem der vorhergehenden Ansprüche und einem mit der Kommunikationseinrichtung (5) des Bodenbearbeitungsgerätes (1) in Kommunikationsverbindung stehenden externen Endgerät (6), **dadurch gekennzeichnet, dass** das externe Endgerät (6) eine Applikation aufweist, welche eingerichtet ist, einen Nutzer des Bodenbearbeitungsgerätes (1) über den ermittelten Abnutzungsgrad der Wechselkomponente (2) zu informieren und von dem Nutzer eine Vorgabe hinsichtlich einer Art einer automatischen Reaktion der Auswerteeinrichtung (4) des Bodenbearbeitungsgerätes (1) auf den ermittelten Abnutzungsgrad und/oder eine Vorgabe hinsichtlich eines Abnutzungsgrades, bei dessen Erreichen die automatische Reaktion erfolgen soll, zu empfangen.

10. System nach Anspruch 9, **dadurch gekennzeichnet, dass** die Art der automatischen Reaktion der Auswerteeinrichtung (4) auf den ermittelten Abnutzungsgrad zumindest beinhaltet: eine automatische Bestellung einer neuen Wechselkomponente (2) bei einem Warenwirtschaftssystem und/oder eine Information über den Abnutzungsgrad an den Nutzer.

## Claims

1. A floor treatment appliance (1) with a replaceable change component (2), a detection device (3) for detecting an actual parameter that is influenced by wear of the change component (2), an evaluation device (4) for determining a degree of wear of the change component (2) based on the actual parameter and a communication device (5) for communicating information concerning a required replacement of the change component (2) to an external terminal (6) that is communicatively linked to the floor treatment appliance (1), wherein the change component (2) comprises a floor treatment element (7) for mechanically acting upon a floor surface to be treated, **characterized in that** the evaluation device (4) is configured for calculating an average value of the actual parameter detected by the detection device (3) referred to a defined time period of at least one hour, for comparing the average value with a defined reference value and for determining the degree of wear of the change component (2) in dependence on the result of the comparison.

2. The floor treatment appliance (1) according to claim 1, **characterized in that** the floor treatment element (7) is a cleaning element, especially a cleaning cloth or a cleaning brush, a floor conditioning element, especially a polishing disk or a waxing disk, or an incorporation tool for incorporating a cleaning medium or a conditioning medium into the floor surface to be treated.

3. The floor treatment appliance (1) according to claim 1 or 2, **characterized in that** the floor treatment element (7) is driven by means of an electric motor (8) or actuator.

4. The floor treatment appliance (1) according to one of the preceding claims, **characterized in that** the detection device (3) is configured for detecting a power consumption or a torque of an electric motor (8) or actuator driving the floor treatment element (7).

5. The floor treatment appliance (1) according to one of the preceding claims, **characterized in that** the actual parameter detected by the detection device (3) is an appliance parameter of the floor treatment appliance (1) or a floor surface parameter of the floor surface treated by the floor treatment element (7).

6. The floor treatment appliance (1) according to one of the preceding claims, **characterized in that** the detection device (3) is an optical measuring device that is configured for recording an image of the floor surface treated by the floor treatment element (7) or for detecting a reflection signal of the treated floor surface.

7. The floor treatment appliance (1) according to one of the preceding claims, **characterized in that** the time period, over which the average value of the actual parameter is formed, amounts to one day or several days, one week or several weeks or one month or several months.

8. The floor treatment appliance (1) according to one of the preceding claims, **characterized in that** the detection device is configured for detecting the actual parameter continuously or in defined time intervals during the time period, over which the average value of the actual parameter is formed.

9. A system consisting of a floor treatment appliance (1) according to one of the preceding claims and an external terminal (6) that is communicatively linked to the communication device (5) of the floor treatment appliance (1), **characterized in that** the external terminal (6) comprises an application that is configured for informing a user of the floor treatment appliance (1) of the determined degree of wear of the change component (2) and for receiving from the user a specification with respect to the type of an automatic reaction of the evaluation device (4) of the floor treatment appliance (1) to be determined degree of wear and/or a specification with respect to a degree of wear, at which the automatic reaction should take place.

10. The system according to claim 9, **characterized in that** the type of the automatic reaction of the evaluation device (4) to the determined degree of wear includes at least the following: an automatic order of a new change component (2) from a merchandise management system and/or the transmission of information on the degree of wear to the user.

## Revendications

1. Appareil de travail du sol (1) avec un composant interchangeable (2), un dispositif de détection (3) pour la détection d'un paramètre réel influencé par une usure du composant interchangeable (2), un dispositif d'évaluation (4) pour la détermination d'un degré d'usure du composant interchangeable (2) à l'aide du paramètre réel et un dispositif de communication (5) pour la communication d'une information concernant une exigence de remplacement du composant interchangeable (2) à un terminal externe (6) se trouvant en liaison de communication avec l'appareil de travail du sol (1), le composant interchangeable (2) présentant un élément de travail du sol (7) pour agir mécaniquement sur une surface de sol à travailler, **caractérisé en ce que** le dispositif d'évaluation (4) est conçu pour calculer, par rapport à une période définie d'au moins une heure, une valeur moyenne du paramètre réel détecté par le dispositif de détection (3), pour comparer la valeur moyenne à une valeur de référence définie et pour déterminer le degré d'usure du composant interchangeable (2) en fonction du résultat de la comparaison.

2. Appareil de traitement du sol (1) selon la revendication 1, **caractérisé en ce que** l'élément de traitement du sol (7) est un élément de nettoyage, en particulier un chiffon de nettoyage ou une brosse de nettoyage, un élément d'entretien du sol, en particulier un disque de polissage ou un disque de cirage, ou un outil d'incorporation pour incorporer un produit de nettoyage ou un produit d'entretien dans la surface du sol à traiter.

3. Outil de travail du sol (1) selon la revendication 1 ou 2, **caractérisé en ce que** l'élément de travail du sol (7) est entraîné au moyen d'un moteur électrique (8) ou d'un actionneur.

4. Outil de travail du sol (1) selon l'une des revendications précédentes, **caractérisé en ce que** le dispositif de détection (3) est agencé pour détecter une consommation de courant ou un couple d'un moteur électrique (8) ou d'un actionneur entraînant l'élément de travail du sol (7).

5. Appareil de travail du sol (1) selon l'une des revendications précédentes, **caractérisé en ce que** le paramètre réel détecté par le dispositif de détection (3) est un paramètre d'appareil de l'appareil de travail du sol (1) ou un paramètre de surface de sol de la surface de sol travaillée par l'élément de travail du sol (7).

6. Outil de travail du sol (1) selon l'une des revendications précédentes, **caractérisé en ce que** le dispositif de détection (3) est un dispositif de mesure optique qui est agencé pour enregistrer une image de la surface du sol travaillée par l'élément de travail du sol (7) ou pour détecter un signal de réflexion de la surface du sol travaillée.

7. Outil de travail du sol (1) selon l'une des revendications précédentes, **caractérisé en ce que** la période sur laquelle la valeur moyenne du paramètre réel est formée comprend un jour ou plusieurs jours, une semaine ou plusieurs semaines, ou un mois ou plusieurs mois.

8. Outil de travail du sol (1) selon l'une des revendications précédentes, **caractérisé en ce que** le dispositif de détection est agencé pour détecter le paramètre réel en continu ou à des intervalles de temps définis pendant la période sur laquelle la valeur moyenne du paramètre réel est formée.

9. Système constitué d'un outil de travail du sol (1) selon l'une des revendications précédentes et d'un terminal externe (6) en liaison de communication avec le dispositif de communication (5) de l'outil de travail du sol (1), **caractérisé en ce que** le terminal externe (6) présente une application qui est configurée, d'informer un utilisateur de l'appareil de travail du sol (1) du degré d'usure déterminé du composant interchangeable (2) et de recevoir de l'utilisateur une consigne concernant un type de réaction automatique du dispositif d'évaluation (4) de l'appareil de travail du sol (1) au degré d'usure déterminé et/ou une consigne concernant un degré d'usure, lorsque la réaction automatique doit être atteinte.

10. Système selon la revendication 9, **caractérisé en ce que** le type de réaction automatique du dispositif d'évaluation (4) au degré d'usure déterminé comprend au moins: une commande automatique d'un nouveau composant de changement (2) auprès d'un système de gestion des marchandises et/ ou une information sur le degré d'usure à l'utilisateur.
